# EUROPÄISCHE PATENTSCHRIFT

(11) **EP 4 289 749 B1**
(45) Veröffentlichungstag und Bekanntmachung des Hinweises auf die Patenterteilung: **30.07.2025**
(21) Anmeldenummer: 23176282.4
(22) Anmeldetag: 31.05.2023
(51) Int. Cl.: B64G 1/22, B64G 1/64, B64G 1/40

(54) **KERNSTRUKTUR FÜR SATELLITEN UND RAUMFAHRZEUGE**
CENTRAL STRUCTURE FOR SATELLITES AND SPACECRAFT
STRUCTURE CENTRAL POUR SATELLITES ET ENGINS SPATIAUX

(30) Priorität: 08.06.2022 DE 102022114410
(43) Veröffentlichungstag der Anmeldung: 13.12.2023
(73) Patentinhaber: MT Aerospace AG, 86153 Augsburg (DE)
(72) Erfinder: Jevons, Matthew, 86420 Diedorf (DE); Spiegel, Michael, 86462 Langweid am Lech (DE); Wegmann, Christian, 86199 Augsburg (DE); Schnaufer, Thomas, 82386 Oberhausen (DE); Deschauer, Niels, 86169 Augsburg (DE)
(74) Vertreter: Grape & Schwarzensteiner

(56) Entgegenhaltungen:
- EP-A1- 0 703 144
- CN-U- 203 996 926
- US-A- 4 682 744
- US-A- 5 848 767
- US-A1- 2002 000 495

## Beschreibung

Die Erfindung ist auf die Bauweise der Kernstruktur für Satelliten und Raumfahrzeuge gerichtet, welche auch Zentralrohr genannt wird.

Diese Zentralrohre stellen die Kernstruktur für Satelliten und Raumfahrzeuge dar und liefern die Schnittstellen für Umgebungsstrukturen davon und für darin anzuordnende Bauteile, wie Treibstofftanks, bzw. stellen diese bereit. Verbunden damit, sind an die Eigenschaften dieser Zentralrohre hohe Anforderungen gerichtet, insbesondere was Stabilität, Festigkeit und Montage betrifft. Die Zentralrohre müssen für ihren Einsatz selbstverständlich auch leicht sein.

Dem letzteren Erfordernis wird im Stand der Technik durch den Einsatz von Faserverbundkunststoff bzw. eine Sandwich-Bauweise Rechnung getragen. Zylinder und Konus des Zentralrohres werden separat gefertigt und zusammengesetzt, wobei nur der Zylinder in Sandwich-Bauweise gefertigt ist. Der Konus, welcher die funktionelle Verbindung zu einer Trägerrakete darstellt, besteht dagegen aus monolithischem Verbund mit angesetztem Aluminiumring an jedem Ende oder gänzlich aus einer Leichtmetall(legierung).

Die US20020000495 A1 beschreibt einen Satellitenaussetzer zum Stützen und Ausladen mehrerer Satelliten, welcher ein einteiliges röhrenförmiges Gehäuse aufweist. Dieses Gehäuse kann ein Satellitenpaar aufnehmen.

Die EP 0 703 144 A1 betrifft ein Verfahren zur Herstellung einer Tragstruktur für ein Raumahrzeug, die einen geformten unteren Teil aufweist, er auf einer Trägerrakete aufgesetzt werden kann. Dazu werden über einen Dorn mit entsprechender Form Fasern gewickelt und mit Harz unter Ausbildung einer Faser-Harz-Matrix getränkt.

Die CN 203996926 U beschreibt eine Art von Satellitenstruktur. Sie weist ein Grundkonstruktion und ein Antriebsmodul auf. Die Grundkonstruktion besteht aus einem Gerüst oder Rahmen aus Kohlfasern, welcher mit Grundplatten versehen ist.

Die Bauweise des Standes der Technik bewirkt hohe Herstellungs- und Montagekosten und ein hohes Gewicht. Alle Befestigungselemente für Umgebungsstrukturen und Tanks müssen strukturell an die kreisrunde Außen- bzw. Innenfläche des Zylinders angepasst werden.

Aufgabe der Erfindung ist es, eine Bauweise für die Kernstruktur für Satelliten und Raumfahrzeuge zur Verfügung zu stellen, welche kostengünstig bezüglich Herstellung und Montage ist und eine Vereinfachung der Schnittstellen/Schnittflächen zu Umgebungsstrukturen und Tanks liefert.

Ein wesentlicher Aspekt dabei sollte die Schaffung von weitgehend flachen und ebenen Anlageflächen zur Aufnahme von Befestigungs- und Verbindungselementen zu den Umgebungsstrukturen und Tanks auf der Zylinder Außen- und Innenseite sein.

Gegenstand der Erfindung ist eine Kernstruktur für Satelliten und Raumfahrzeuge in Form eines Zentralrohrs (1), mit einem Zylinder (2) als Schnittstelle für Umgebungsstrukturen und einem Konus (3) als funktionale Verbindung zu einer Trägerrakete, wobei der Zylinder (2) und der Konus (3) einstückig und integral aus faserverstärktem Kunststoff aufgebaut sind, der Zylinder (2) einen polygonalen Querschnitt aufweist, sodass auf der Außen- und Innenseite des Zylinders (2) eine Vielzahl ebener Flächen (4) als funktionale Schnittstellen ausgebildet sind, die sich zumindest teilweise über die Längsrichtung des Zylinders vom Konus (3) bis zum gegenüberliegenden Ende des Zylinders (2) erstrecken.

Die einteilige, d.h. integrale Bauweise, bei welcher Konus und Zylinder quasi verschmolzen sind, senkt die Herstellungskosten für die Zentralrohre deutlich, da diese in einem Schritt unter Anwendung üblicher Herstellungsverfahren für faserverstärkte Kunststoffkörper, wie AFP (automated fiber placement) und dergleichen, realisierbar ist. Damit eröffnet sich auch die Möglichkeit solche Zentralrohre in Serie zu produzieren.

Die Montagekosten, sind in zweierlei Hinsicht reduziert. Erstens entfällt der Schritt des Verbindens, meistens Verschraubens des Zylinders mit dem Konus. Damit wird gleichzeitig Zeit und Gewicht eingespart.

Wesentlich sind aber die durch den polygonalen Querschnitt geschaffenen ebenen Flächen, welche vereinfachte Schnittstellen bzw. Anlageflächen für Befestigungs- und Verbindungselemente zur Montage von Tanks und Umgebungsstrukturen darstellen. Nicht nur die eigentliche Montage dieser Tanks und Umgebungsstrukturen wird dadurch deutlich vereinfacht, sondern auch anderenfalls auftretende Scherbelastungen reduziert.

Durch diese erfindungsgemäße Bauweise findet somit schon bei der Herstellung der Zentralrohre ein funktionales Grading, eine funktionelle Einteilung des Zentralrohrs für deren späteren Einsatz statt.

In einer bevorzugten Ausführungsform ist der faserverstärkte Kunststoff monolithisch über Zylinder und Konus ausgeführt. Eine händische Ablage ist möglich, jedoch wird eine automatisierte Ablage aufgrund der damit verbundenen höheren Genauigkeit und Geschwindigkeit bevorzugt.

Vorzugsweise ist zumindest in einem Teilbereich des Zylinders eine Sandwichbauweise integriert. Die Möglichkeit der Kombination aus monolithischem und Sandwichaufbau in einem Arbeitsgang wird durch ein automatisiertes Ablageverfahren erleichtert und dient in einfacher Weise der Verbesserung der Biegesteifigkeit des Zylinders.

Bei einer anderen Ausführungsform der erfindungsgemäßen Zentralrohre für Satelliten und Raumfahrzeuge ist die Biegefestigkeit im Zylinder dadurch verbessert, dass zumindest in einem Teilbereich davon vertikale Verstärkungen durch zusätzlich abgelegtes Fasermaterial (Prepreg oder Trockenfasern) band- oder streifenförmig angelegt ist. Das zusätzliche Fasermaterial, das vorzugsweise mittig in den durch die Polygonform erzeugten ebenen Flächen aufgebracht ist, resultiert in einer lokalen Verdickung und damit Versteifung des Zylinders. Diese Verdickungen sind auch als verbesserte Schnittstellen für Befestigungs- und Verbindungselemente genutzt werden und stellen daher ein weiteres funktionales Grading des Zentralrohres bei dessen Herstellung dar.

Des Weiteren ist es von Vorteil, wenn zusätzlich wenigstens eine horizontal umlaufende Verstärkung durch zusätzlich abgelegtes Fasermaterial (Prepreg oder Trockenfasern) band- oder streifenförmig angelegt ist, wobei sich die vertikalen und horizontalen bandförmigen Verstärkungen idealer Weise kreuzen. Die Biegefestigkeit wird dadurch deutlich verbessert. Wie vorher resultiert das zusätzliche Fasermaterial in einer lokalen Verdickung und damit Versteifung des Zylinders. Die Verdickungen können auch als verbesserte Schnittstellen für Befestigungs- und Verbindungselemente genutzt werden und stellen daher ein weiteres funktionales Grading des Zentralrohres bei dessen Herstellung dar.

Die Verstärkungsbänder sind am Besten in einem unteren Teilbereich des Zylinders zum Konus hin angelegt. Zur weiteren funktionellen Ausgestaltung (funktionelles Grading) des Zylinders ist erfindungsgemäß oberhalb des verstärkten Teilbereichs wenigstens ein weiteres horizontal umlaufendes Verstärkungsband durch zusätzlich abgelegtes Fasermaterial band- oder streifenförmig angelegt. Es dient ebenfalls zum Einbringen von Befestigungsinserts für im Inneren des Zylinders aufzunehmende Baueinheiten. Auch hier bewirkt das Verstärkungsband eine Aufdickung im Verbund, sodass das Einbringen von Bohrungen für die Aufnahme der Befestigungsinserts weitgehend zerstörungsfrei erfolgen kann und die Tragkraft erhöht ist.

Der faserverstärkte Kunststoff kann prinzipiell aus allen im Stand der Technik und dem hier relevanten technischen Fachgebiet üblichen Verstärkungsfasern aufgebaut sein, wie Keramik-, Aramid-, Bor- oder Glasfasern. Aufgrund der bekannt guten und für den gedachten Einsatz wünschenswerten Eigenschaften sind allerdings Kohlefasern bevorzugt. Mischungen sind denkbar. Die Fasern sind oder werden vorzugsweise in eine Epoxidmatrix eingebettet.

Die Anzahl der durch den polygonalen Querschnitt gebildeten ebenen Flächen ist zwar mit dem einzuhaltenden Durchmesser des Zylinders korreliert, jedoch werden umso mehr vereinfachte Schnittstellen erzeugt, je mehr ebene Flächen vorhanden sind.

Für einige Anwendungsfälle kann es von Vorteil sein, wenn an dem Ende des Zylinders, welcher dem Konus gegenüberliegt, ein verlängernder kreisförmiger Abschnitt integral angeformt ist. Selbstverständlich wird auch dieser kreisförmige Abschnitt einteilig, integral zusammen mit Konus und Zylinder ausgebildet. Auch dieser Abschnitt kann eine funktionelle Aufgabe erfüllen, indem er der Aufnahme von Befestigungselementen für ein sogenanntes equipment deck dient.

Der Körper aus Faserverbundkunststoff kann wahlweise aus Prepreg-Material, also einem vorimprägnierten Fasermaterial, oder aus Fasergelege im Infusionsverfahren aufgebaut sein. Das Fasergelege, das vorimprägniert ist oder nicht, wird vorzugsweise auf einem endformnahen Ablegewerkzeug abgelegt.

Details einer erfindungsgemäß ausgestalteten Kernstruktur für

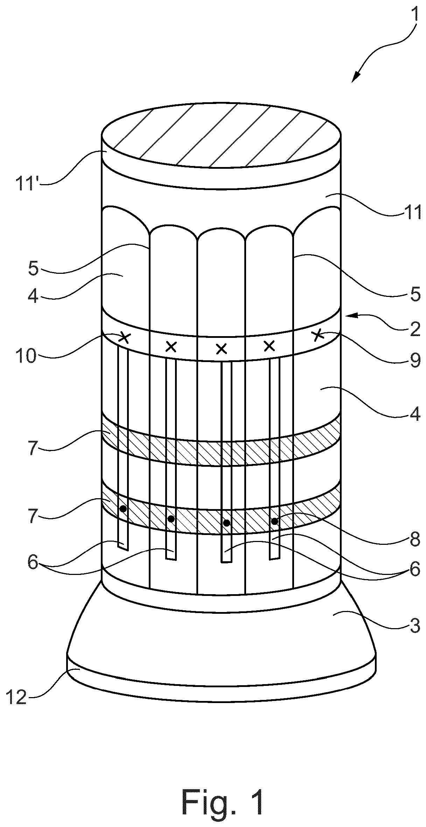

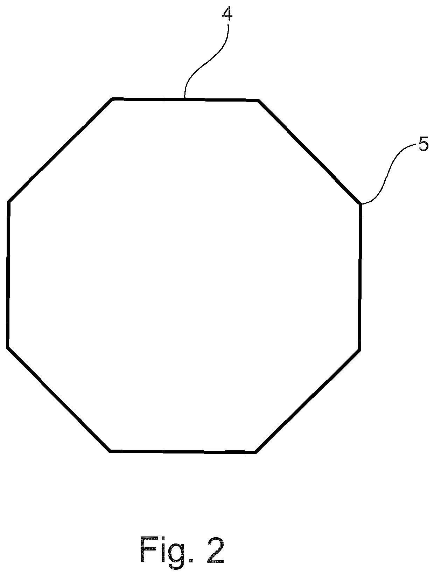

Satelliten und Raumfahrzeuge sowie dessen Bauweise ergeben sich aus der Beschreibung der anliegenden Figuren 1 und 2, worin
Fig. 1 eine erfindungsgemäß ausgestaltete Kernstruktur und
Fig.2 schematisch einen horizontalen Schnitt durch eine Kernstruktur gemäß Fig. 1 zeigt.

Die Figur 1 zeigt somit eine erfindungsgemäß ausgestaltete Kernstruktur 1 für die Verwendung in Satelliten und Raumfahrzeugen. Die Kernstruktur 1 besteht aus einem zylindrischen Teil (Zylinder) 2 und einem konischen Teil (Konus) 3. Zylinder 2 und Konus 3 sind einteilig, d.h. integral aus faserverstärktem Kunststoff in Leichtbauweise ausgebildet. Die Kernstruktur 1 für die Verwendung in Satelliten und Raumfahrzeugen ist einteilig, insbesondere aus kohlefaserverstärktem Kunststoff (CFRP) aufgebaut, d.h. der Zylinder 2 und der Konus 3 bilden durch die Art der Bauweise eine Einheit und müssen nicht nachträglich zusammengesetzt und miteinander verbunden werden. Dieses Merkmal bewirkt nicht nur eine vereinfachte und beschleunigte Herstellung, sondern auch eine verbesserte Sicherheit und Stabilität des Übergangsbereichs zwischen Zylinder 2 und Konus 3, da beispielsweise Bohrungen für eine vorzunehmende Verschraubung stets auch eine Verletzung und damit Schwächung des Faserverbunds mit sich bringen würde.

Wesentliches Element der vorliegenden Erfindung ist, dass der zylindrische Teil im Wesentlichen über seine Längserstreckung und umfänglich eine Vielzahl aneinander gereihter ebener Flächen 4 und zwar sowohl innen als auch außen im bzw. am Zylinder aufweist. Dieser Aspekt ist vereinfacht in Figur 2 veranschaulicht.

Die Vielflächigkeit und Vieleckigkeit wird somit durch den in Figur 2 dargestellten polygonalen Querschnitt des Zylinders 2 erreicht. Die ebenen Flächen 4 dienen in idealer Weise als Schnittstellen bzw. Schnittflächen für mit dem Zentralrohr 1 zu verankernden Umgebungsstrukturen (nicht gezeigt) und Tanks (nicht gezeigt). Anderenfalls müssen, wie bisher im Stand der Technik erfolgt, entweder die Verankerungs- bzw. Befestigungselemente strukturell an den jeweiligen Kreisabschnitt bzw. - bogen des Zylinders, an welchem die Verankerungs- bzw. Befestigungselemente angebracht sein sollen, angepasst oder spezielle Zwischenlager bzw. Oberflächen-Modulierungen vorgesehen werden.

Die Anzahl der durch den polygonalen Querschnitt gebildeten ebenen Flächen 4 ist zwar, wie bereits gesagt, mit dem einzuhaltenden Durchmesser bzw. Querschnitt des Zylinders 2 korreliert, jedoch werden umso mehr vereinfachte Schnittstellen erzeugt, je mehr ebene Flächen 4 vorhanden sind. Die ebenen Flächen 4, welche über die Längserstreckung des Zylinders 2 geschaffen sind, müssen nicht notwendigerweise über den gesamten Umfang des Zylinders 2 und in identischer Breite vorgesehen sein. Die Anordnung über den gesamten Umfang und in identischer Breite ist jedoch bevorzugt. Dem Zylinder muss auch nicht notwendigerweise eine Kreisform zugrunde liegen. Auch beispielsweise ovale oder elliptische Grundformen sind denkbar. In jedem Fall verhilft die Polygonalität zu vereinfachten Schnittflächen in und am Zylinder.

Unter dem Begriff Umgebungsstrukturen wird man im Rahmen der vorliegenden Erfindung insbesondere die außen am Zylinder zu befestigenden Scherpaneelen verstehen. Diese werden im Allgemeinen mit Hilfe von sogenannten Klemmen oder Winkelstücken mit dem zylindrischen Teil des Zentralrohrs 1 verbunden.

Hierbei erweisen sich die durch den polygonalen Querschnitt geschaffenen ebenen Flächen 4 auf der äußeren Oberfläche des zylindrischen Teils des Zentralrohrs 1 als besonders nützlich. Die ebenen Flächen bieten eine ideale Basis für die Anbringung der Klemmen oder Winkelstücke, welche dann Scherpaneelen tragen sollen. Diese Klemmen oder Winkelstücke werden beispielsweise links und rechts von den zwischen den ebenen Flächen gebildeten Kanten 5 angeordnet. Damit unterschiedliche Dicken im Faserverbund leichter ausgeglichen werden können, können/sollen die Klemmen oder Winkelstücke gesplittet sein.

Unter dem Begriff Tanks wird man im Rahmen der vorliegenden Erfindung insbesondere Tanks zur Aufnahme und zum Transport von Monomethylhydrazin, Helium und Sauerstoff-StickstoffGemisch verstehen. Derartige Tanks werden im Allgemeinen durch in den Verbundkunststoff eingebrachte Inserts mit damit verbindbaren Befestigungselementen für die Tanks ermöglicht.

Auch hier erweisen sich die durch den polygonalen Querschnitt geschaffenen ebenen Flächen auf der inneren und äußeren Oberfläche des zylindrischen Teils der Kernstruktur 1 als besonders nützlich. Die ebenen Flächen bieten eine ideale Basis für die Anbringung der Inserts und Befestigungsmittel, welche dann die Tanks fixieren und tragen sollen. Eine Anpassung der Inserts an das Oberflächenprofil der Kernstruktur 1 oder eine entsprechende nachträgliche Modulierung des Oberflächenprofils ist nicht erforderlich. Die ebenen Flächen erlauben eine rasche und unkomplizierte Anbringung der Befestigungselemente und fördern eine stabile Verbindung zwischen Tanks und dem zylindrischen Teil der Kernstruktur 1.

Im Vergleich zu Zentralrohren des Standes der Technik ist gemäß der vorliegenden Erfindung der Faserverbund monolithisch ausgebildet. Es kann daher notwendig sein, den Verbund in bestimmten Bereichen, insbesondere was den Teil des Zylinders 2 betrifft, zu verstärken, d.h. die Biegefestigkeit zu erhöhen. Das kann durch Integrieren einer Sandwichbauweise in Teilbereichen des Zylinders 2 geschehen. Ein Sandwich beinhaltet wie üblich einen Schaumstoffkern, auf dessen Oberseite und Unterseite eine Faserverbundhaut aufgebracht ist und vermittelt daher Biegefestigkeit.

Bei der in Figur 1 dargestellten Ausführungsform wird die Biegefestigkeit in vorteilhafterweise durch Einbringen von zusätzlichen Verstärkungslagen aus demselben Verbundmaterial wie das Zentralrohr 1 selbst in einem zum Konus 3 hin gerichteten Bereich des Zylinders 2 verwirklicht.

In Figur 1 sind dazu band- bzw. streifenförmige vertikale Verstärkungslagen 6 sowie zwei horizontal umlaufende Verstärkungslagen 7 derart angelegt, dass sich die Verstärkungslagen 6 und 7 kreuzen. Durch die Verstärkungslagen, welche die Biegefestigkeit verbessern, sind über den Umfang des Zylinders 2 lokale Verdickungen des Faserverbunds gebildet. Inserts 8 in dem Faserverbund werden daher vorzugsweise in diesen verdickten Bereichen angeordnet, sodass eine verbesserte Lasttoleranz resultiert. Weitere horizontal umlaufende Verstärkungsbänder 9 können oberhalb der vertikalen Verstärkungsbänder zur Erhöhung der Biegefestigkeit angeordnet sein, im gezeigten Fall ein horizontal umlaufendes Band 9, worin wieder Inserts 10 für Befestigungs- oder Verbindungselemente eingebracht sind.

Bei der in Figur 1 dargestellten Ausführungsform ist am oberen, dem Konus 3 gegenüberliegenden Ende des Zylinders 2 ein verlängernder Kreiszylinder-Abschnitt 11 integral angeformt. Dessen oberster Abschnitt 11' ist/wird mit sogenannten Opferschichten, beispielsweise aus Glasfaser, zur Besserung Bearbeitbarkeit (Schleifen) versehen. Dieser Bereich dient dann wieder zur Anbringung von Befestigungselementen für Umgebungsstrukturen, wie das obere "equipment deck".

Solche Opferschichten aus schleifbarem Material, wie Glasfaser, können zur späteren Bearbeitung partiell auch auf der äußeren Oberfläche vorgesehen werden, vorzugsweise in Bereichen, in welchen Bohrungen oder Klebungen nötig sind, um akkurate Anlageflächen für Befestigungselemente zu schaffen.

Der Konus 3 ist in üblicher Weise ausgebildet, wobei sich sein Durchmesser ausgehend vom Zylinder kontinuierlich erweitert und in einem senkrecht zum Verlauf angeformten Ring 12 endet. Letztere dient zur Aufnahme eines metallischen Schnittstellenrings für eine Trägerrakete (LIR).

Der Faserverbund wird in bekannter Weise durch Ablegen eines vorzugsweise mit Harz vorimprägnierten Fasermaterials auf einem endformnahen Ablegewerkzeug und anschließendem Aushärten im Autoklaven erzeugt. Denkbar ist auch das Ablegen von Trockenfasern mit anschließender Harzinfiltration und Aushärten des infiltrieren Fasergeleges im Ofen möglich.

Wie bereits erwähnt sind bevorzugte Verstärkungsfasern Kohlefasern und das bevorzugte Harz ist Epoxidharz. Das gilt für beide Varianten.

Endformnah bedeutet im Rahmen der vorliegenden Erfindung, dass das die äußere Kontur des verwendeten Ablagewerkzeugs selbst einen zylindrischen Teil und einen konischen Teil beinhaltet bzw. umfasst. Im Zylinder davon sind über die Längserstreckung davon aneinandergereihte und aneinandergrenzende ebene Flächen 4 wie für die erfindungsgemäße Bauweise des Zentralrohrs ausgebildet.

Die Ablage des Prepregs oder der Trockenfasern erfolgt händisch, vorzugsweise maschinell und automatisiert (AFP) in einem Wickelverfahren. Dabei kann ebenso eine Sandwichbauweise, wie oben beschrieben, integriert werden, wie das Einbringen von wie oben beschriebenen Verstärkungsbändern.

Das Ablegewerkzeug ist so gestaltet, dass es nach Fertigstellung der Grundstruktur des Zentralrohrs entfernt werden kann. Die Innenseite des Zentralrohrs benötigt aufgrund der Herstellung auf einem Werkzeug keine Nachbearbeitung.

Die erfindungsgemäß gestaltete und aufgebaute Kernstruktur 1 kann sodann in üblicher Weise und mit für ihre Verwendung üblichen Gadgets, wie Inserts, Klemmen, Winkelstücke, Tanks, Scherpaneelen, elektrischen Leitungen, etc. ausgerüstet werden.

Mit der erfindungsgemäßen Bauweise lässt sich ein funktionelles Grading, eine funktionelle Einteilung der Kernstruktur, wie diese oben beschrieben ist, in einfacher Weise schnell und kostengünstig bereits bei dessen Herstellung erreichen.

## Patentansprüche

1. Kernstruktur für Satelliten und Raumfahrzeuge in Form eines Zentralrohrs (1), mit einem Zylinder (2) als Schnittstelle für Umgebungsstrukturen und einem Konus (3) als funktionale Verbindung zu einer Trägerrakete, wobei der Zylinder (2) und der Konus (3) einstückig und integral aus faserverstärktem Kunststoff aufgebaut sind, **dadurch gekennzeichnet, dass** der Zylinder (2) einen polygonalen Querschnitt aufweist, sodass auf der Außen- und Innenseite des Zylinders (2) eine Vielzahl ebener Flächen (4) als funktionale Schnittstellen ausgebildet sind, die sich zumindest teilweise über die Längsrichtung des Zylinders vom Konus (3) bis zum gegenüberliegenden Ende des Zylinders (2) erstrecken.

2. Kernstruktur gemäß Anspruch 1, **dadurch gekennzeichnet, dass** der faserverstärkte Kunststoff monolithisch über Zylinder (2) und Konus (3) ausgeführt ist.

3. Kernstruktur gemäß Anspruch 1 und 2, **dadurch gekennzeichnet, dass** zumindest in einem Teilbereich des Zylinders (2) zur Verbesserung der Biegesteifigkeit eine Sandwichbauweise integriert ist.

4. Kernstruktur gemäß Anspruch 1 und 2, **dadurch gekennzeichnet, dass** zumindest in einem Teilbereich des Zylinders (2) zur Verbesserung der Biegesteifigkeit vertikale Verstärkungen (6) durch zusätzlich abgelegtes Fasermaterial bandförmig angelegt sind.

5. Kernstruktur gemäß Anspruch 1, 2 und 4, **dadurch gekennzeichnet, dass** in einem Teilbereich des Zylinders (2) zur Verbesserung der Biegefestigkeit wenigstens eine horizontal umlaufende Verstärkung (7) durch zusätzlich abgelegtes Fasermaterial bandförmig angelegt ist.

6. Kernstruktur gemäß den Ansprüchen 4 und 5, **dadurch gekennzeichnet, dass** die vertikalen und horizontalen bandförmigen Verstärkungen (6,7) im selben Teilbereich des Zylinders (2) angelegt sind.

7. Kernstruktur gemäß den Ansprüchen 4, 5 und 6, **dadurch gekennzeichnet, dass** sich die vertikalen und horizontalen bandförmigen Verstärkungen (6,7) im Wesentlichen senkrecht kreuzen.

8. Kernstruktur gemäß den Ansprüchen 4 bis 7, **dadurch gekennzeichnet, dass** die Verstärkung (6,7) in einem unteren Teilbereich des Zylinders zum Konus hin angelegt ist.

9. Kernstruktur gemäß Anspruch 8, **dadurch gekennzeichnet, dass** oberhalb des verstärkten Teilbereichs wenigstens ein weiteres, horizontal umlaufendes Verstärkungsband (9) durch zusätzlich abgelegtes Fasermaterial bandförmig angelegt ist, zum Einbringen von Befestigungsinserts für im Inneren des Zylinders aufzunehmende Baueinheiten.

10. Kernstruktur gemäß einem jeden der Ansprüche 1 bis 9, **dadurch gekennzeichnet, dass** der faserverstärkte Kunststoff ein mit Kohlenstofffasern verstärkter Kunststoff ist.

11. Kernstruktur gemäß einem jeden der Ansprüche 1 bis 10, **dadurch gekennzeichnet, dass** die Anzahl der durch den polygonalen Querschnitt gebildeten ebenen Flächen (4) mit dem einzuhaltenden Durchmesser des Zylinders (2) korreliert.

12. Kernstruktur gemäß einem jeden der Ansprüche 1 bis 11, **dadurch gekennzeichnet, dass** an dem dem Konus (3) gegenüberliegende Ende des Zylinders (2) ein verlängernder kreisförmiger Abschnitt (11) einteilig und integral angeformt ist.

13. Kernstruktur gemäß einem jeden der Ansprüche 1 bis 12, **dadurch gekennzeichnet, dass** der Faserverbundkunststoff aus Prepreg-Material aufgebaut ist.

14. Kernstruktur gemäß einem jeden der Ansprüche 1 bis 12, **dadurch gekennzeichnet, dass** der Faserverbundkunststoff aus Fasergelege im Harz-Infusionsverfahren aufgebaut ist.

## Claims

1. Core structure for satellites and spacecraft in the form of a central tube (1), with a cylinder (2) as an interface for surrounding structures and a cone (3) as a functional connection to a launch vehicle, wherein the cylinder (2) and the cone (3) are constructed in one piece and integrally from fiber-reinforced plastic, **characterized in that** the cylinder (2) has a polygonal cross-section, so that a plurality of flat surfaces (4) are formed on the outer and inner sides of the cylinder (2) as functional interfaces, which extend at least partially along the longitudinal direction of the cylinder from the cone (3) to the opposite end of the cylinder (2).

2. Core structure according to claim 1, **characterized in that** the fiber-reinforced plastic is monolithically formed over the cylinder (2) and cone (3).

3. Core structure according to claims 1 and 2, **characterized in that** a sandwich construction is integrated at least in one part of the cylinder (2) to improve bending stiffness.

4. Core structure according to claims 1 and 2, **characterized in that**, at least in one part of the cylinder (2), vertical reinforcements (6) are applied in a strip form by means of additionally deposited fiber material in order to improve the bending stiffness.

5. Core structure according to claims 1, 2, and 4, **characterized in that**, in a part of the cylinder (2), at least one horizontally circumferential reinforcement (7) is applied in the form of a strip made of additionally deposited fiber material in order to improve the bending strength.

6. Core structure according to claims 4 and 5, **characterized in that** the vertical and horizontal strip-shaped reinforcements (6, 7) are applied in the same part of the cylinder (2).

7. Core structure according to claims 4, 5, and 6, **characterized in that** the vertical and horizontal strip-shaped reinforcements (6, 7) cross each other essentially perpendicularly.

8. Core structure according to claims 4 to 7, **characterized in that** the reinforcement (6, 7) is applied in a lower part of the cylinder toward the cone.

9. Core structure according to claim 8, **characterized in that** at least one further horizontally circumferential reinforcing strip (9) is applied in strip form above the reinforced part by means of additionally deposited fiber material, for inserting fastening inserts for components to be accommodated inside the cylinder.

10. Core structure according to anyone of claims 1 to 9, **characterized in that** the fiber-reinforced plastic is a plastic reinforced with carbon fibers.

11. Core structure according to anyone of claims 1 to 10, **characterized in that** the number of flat surfaces (4) formed by the polygonal cross-section correlates with the diameter of the cylinder (2) to be maintained.

12. Core structure according to anyone of claims 1 to 11, **characterized in that** a circular extension section (11) is formed in one piece and integrally on the end of the cylinder (2) opposite the cone (3).

13. Core structure according to anyone of claims 1 to 12, **characterized in that** the fiber composite plastic is constructed from prepreg material.

14. Core structure according to anyone of claims 1 to 12, **characterized in that** the fiber composite plastic is constructed from fiber mats using a resin infusion process.

## Revendications

1. Structure centrale pour satellites et engins spatiaux sous la forme d'un tube central (1), avec un cylindre (2) servant d'interface pour des structures environnantes et un cône (3) servant de liaison fonctionnelle avec un lanceur, le cylindre (2) et le cône (3) étant réalisés d'un seul tenant et intégralement en matière plastique renforcée par des fibres, **caractérisée en ce que** que le cylindre (2) présente une section transversale polygonale, de sorte qu'une multitude de surfaces planes (4) sont formées sur les côtés extérieur et intérieur du cylindre (2) en tant qu'interfaces fonctionnelles qui s'étendent au moins en partie dans la direction longitudinale du cylindre, depuis le cône (3) jusqu'à l'extrémité opposée du cylindre (2).

2. Structure centrale selon la revendication 1, **caractérisée en ce que** la matière plastique renforcée par des fibres est réalisée de manière monolithique sur le cylindre (2) et le cône (3).

3. Structure centrale selon les revendications 1 et 2, **caractérisée en ce que**, au moins dans une partie du cylindre (2), une structure sandwich est intégrée afin d'améliorer la rigidité à la flexion.

4. Structure centrale selon les revendications 1 et 2, **caractérisée en ce que**, au moins dans une partie du cylindre (2), des renforts (6) verticaux sont disposés en forme de bandes à partir d'un matériau fibreux supplémentaire déposé afin d'améliorer la rigidité à la flexion.

5. Structure centrale selon les revendications 1, 2 et 4, **caractérisée en ce que**, dans une partie du cylindre (2), au moins un renfort (7) s'étendant horizontalement est appliqué sous forme de bande à partir d'un matériau fibreux supplémentaire déposé afin d'améliorer la résistance à la flexion.

6. Structure centrale selon les revendications 4 et 5, **caractérisée en ce que** les renforts (6, 7) verticaux et horizontaux en forme de bandes sont disposés dans la même partie du cylindre (2).

7. Structure centrale selon les revendications 4, 5 et 6, **caractérisée en ce que** les renforts (6, 7) verticales et horizontales en forme de bandes se croisent essentiellement à la verticale.

8. Structure centrale selon les revendications 4 à 7, **caractérisée en ce que** le renfort (6, 7) est disposé dans une partie inférieure du cylindre en direction du cône.

9. Structure centrale selon la revendication 8, **caractérisée en ce qu'**au moins une autre bande de renfort (9) s'étendant horizontalement est disposée au-dessus de la partie renforcée sous la forme d'une bande à partir d'un matériau fibreux supplémentaire déposé, afin d'introduire des inserts de fixation pour des éléments à monter à l'intérieur du cylindre.

10. Structure centrale selon l'une quelconque des revendications 1 à 9, **caractérisée en ce que** la matière plastique renforcée par des fibres est une matière plastique renforcée par des fibres de carbone.

11. Structure centrale selon l'une quelconque des revendications 1 à 10, **caractérisée en ce que** le nombre des surfaces planes (4) formées par la section transversale polygonale est en corrélation avec le diamètre à respecter du cylindre (2).

12. Structure centrale selon l'une quelconque des revendications 1 à 11, **caractérisée en ce qu'**une partie circulaire prolongée (11) est formée d'un seul tenant et de manière intégrale à l'extrémité du cylindre (2) opposée au cône (3).

13. Structure centrale selon l'une quelconque des revendications 1 à 12, **caractérisée en ce que** la matière plastique renforcé par des fibres est constituée d'un matériau préimprégné.

14. Structure centrale selon l'une quelconque des revendications 1 à 12, **caractérisée en ce que** la matière plastique renforcée par des fibres est constituée d'un tissu de fibres fabriqué selon le procédé d'infusion de résine.
